# EUROPEAN PATENT APPLICATION

(11) **EP 4 675 897 A1**
(43) Date of publication of application: **07.01.2026**
(21) Application number: 24784198.4
(22) Date of filing: 29.03.2024
(51) Int. Cl.: H02K 5/24

(54) **ANTI-VIBRATION RING AND MOTOR ASSEMBLY**

(30) Priority: 04.04.2023 CN 202310362258; 07.04.2023 CN 202310374116
(71) Applicant: Guangdong Welling Motor Manufacturing Co., Ltd., Foshan, Guangdong 528311 (CN)
(72) Inventor: ZHOU, Jiahong, Foshan, Guangdong 528311 (CN); HE, Guancheng, Foshan, Guangdong 528311 (CN); XU, Jianpeng, Foshan, Guangdong 528311 (CN); LIANG, Yitian, Foshan, Guangdong 528311 (CN); CEN, Haitao, Foshan, Guangdong 528311 (CN)
(74) Representative: RGTH
(86) International application number: PCT/CN2024/085013
(87) International publication number: WO 2024/208114

(57) **Abstract**

Disclosed are an anti-vibration ring and a motor assembly. The anti-vibration ring includes: an anti-vibration body, an installation ring and an anti-rotation limit part. The anti-vibration body is connected to one of the ring surfaces of the installation ring, and an identification structure is provided at the anti-vibration body and/or the installation ring. The anti-rotation limit part includes limit protrusions respectively provided at the edges of the anti-vibration body and/or the installation ring on opposite sides, and at least part of the identification structure is provided between two limit protrusions.

## Description

The present application claims priority to Chinese Patent Application No. 202310362258.5 filed on April 4, 2023 and Chinese Patent Application No. 202310374116.0 filed on April 7, 2023, the entire contents of which are incorporated herein by reference.

### TECHNICAL FIELD

The present application relates to the technical field of motors, and in particular to an anti-vibration ring and a motor assembly.

### BACKGROUND

As a commonly used power device, motors are widely used in various industrial production activities and daily life. For example, in industrial production, motors are often used as a driving force source to drive the operation of production equipment; in life, motors can be used in various household appliances such as electric fans, air conditioners and washing machines.

For example, in an air conditioner, the motor can drive the swing of the air conditioner blades and the air supply of the air conditioner. Since the rotor inside the motor rotates, the motor often vibrates. Nowadays, rubber rings are often installed at the motor to reduce vibration and noise.

However, the anti-vibration ring is generally made of rubber material, which has a certain deformation ability. Therefore, it is difficult to install the anti-vibration ring in the correct position, which affects the accuracy of the installation position of the motor in the corresponding equipment or household appliances, and then affects the normal operation of the motor or related equipment.

### SUMMARY

The main purpose of the present application is to propose an anti-vibration ring, aiming to improve the accuracy of the installation position of the anti-vibration ring.

In order to achieve the above purpose, the present application proposes an anti-vibration ring, which comprises:
an anti-vibration body;
an installation ring, the anti-vibration body is connected to one of ring surfaces of the installation ring, and an identification structure is provided at the anti-vibration body and/or the installation ring; and
an anti-rotation limit part provided at an edge of the anti-vibration body and/or the installation ring.

In an embodiment, the identification structure is configured as at least one identification character.

In an embodiment, the identification structure is configured as at least one identification character provided at a surface of the anti-vibration body away from the installation ring.

In an embodiment, the identification character comprises at least two characters arranged along a circumference direction of the anti-vibration body, and a gap is provided between two adjacent characters.

In an embodiment, the at least two characters are configured as one or more of words, letters, symbols or numbers; and/or the at least two characters is one or more of coated characters, raised characters and grooved characters.

In an embodiment, the at least two characters are configured as "O", "T", "W", "M" or "!".

In an embodiment, the identification structure is configured as at least one of an identification notch and/or an identification protrusion provided at an outer edge of the installation ring.

In an embodiment, the identification structure is configured as at least one identification ring provided at a surface of the anti-vibration body away from the installation ring.

In an embodiment, the identification structure is configured as a plurality of identification rings arranged along a radial direction of the anti-vibration body; and/or
the identification ring is configured as at least one of a ring-shaped coating mark, a ring-shaped protrusion or a ring-shaped groove.

In an embodiment, the anti-vibration body is in a ring shape, and the installation ring is provided coaxially with the anti-vibration body.

In an embodiment, an outer diameter of the installation ring is greater than an outer diameter of the anti-vibration body, and an inner diameter of the installation ring is less than or equal to an outer diameter of the anti-vibration body and greater than or equal to an inner diameter of the anti-vibration body.

In an embodiment, the anti-rotation limit part comprises limit protrusions respectively provided at edges of the anti-vibration body and/or the installation ring on opposite sides; the limit protrusions are connected to an outer peripheral surface of the anti-vibration body and to a side surface of the installation ring adjacent to the anti-vibration body, and the limit protrusions are at least partially protruded radially from the installation ring.

In an embodiment, cross-sectional areas of the limit protrusions gradually increase from one end away from the anti-vibration body to the other end.

In an embodiment, a maximum thickness of the limit protrusions in an axial direction of the anti-vibration body is less than or equal to a sum of a thickness of the anti-vibration body and a thickness of the installation ring.

In an embodiment, an anti-slip rib is provided between two adjacent limit protrusions.

In an embodiment, the anti-slip rib is provided at the outer peripheral surface of the anti-vibration body, and the anti-slip rib extends in an axial direction of the anti-vibration body.

In an embodiment, an axial thickness of the installation ring is less than an axial thickness of the anti-vibration body.

In an embodiment, a ratio of a radial thickness of the installation ring to the anti-vibration body is from 1:2 to 1:6.

In an embodiment, the installation ring has a rectangular axial cross section.

In an embodiment, the installation ring and the anti-vibration body are made of rubber or silicone.

In an embodiment, the installation ring, the anti-vibration body and the anti-rotation limit part are integrally formed.

The present application further proposes a motor assembly, comprising a motor and the anti-vibration ring as described above, and the anti-vibration ring is mounted at an end of the motor.

### BRIEF DESCRIPTION OF THE DRAWINGS

In order to more clearly illustrate the technical solutions in the embodiments of the present application or in the related art, accompanying drawings required for the description of the embodiments or the related art will be briefly introduced below. Obviously, the drawings described below are only some embodiments of the present application. For those skilled in the art, other drawings can be obtained based on the structures shown in these drawings without creative efforts.
FIG. 1 is a schematic diagram of an overall structure of the present application.
FIG. 2 is a schematic diagram of an assembly state of the present application, where A is a motor and B is a positioning part.
FIG. 3 is a schematic structural diagram according to an embodiment of the present application.
FIG. 4 is a schematic structural diagram according to another embodiment of the present application.
FIG. 5 is a schematic structural diagram according to another embodiment of the present application.
FIG. 6 is a schematic structural diagram according to another embodiment of the present application.
FIG. 7 is a schematic structural diagram according to another embodiment of the present application.
FIG. 8 is a schematic structural diagram of the present application from another perspective.

Description of reference signs:

| reference sign | name | reference sign | name |
|---|---|---|---|
| 100 | anti-vibration body | 110 | anti-rotation limit part |
| 111 | limit protrusion | 120 | anti-slip rib |
| 200 | installation ring | 300 | identification structure |
| 311 | identification notch | 312 | indication opening |
| 313 | identification ring | 314 | identification character |

The realization of the purpose, functional features and advantages of the present application will be further described in conjunction with embodiments and with reference to the accompanying drawings.

### DETAILED DESCRIPTION OF THE EMBODIMENTS

The technical solutions in the embodiments of the present application will be described clearly and completely below in conjunction with the drawings. Obviously, the described embodiments are some rather than all of the embodiments of the present application. Based on the embodiments in the present application, all other embodiments obtained by those skilled in the art without creative efforts are within the scope of the present application.

It should be noted that if the embodiments of the present application involve directional indications such as up, down, left, right, front, back, etc., the directional indications are only used to explain the relative position relationship, movement status and the like between the components in a certain specific posture as shown in the figures. If the specific posture changes, the directional indication will also change accordingly.

In addition, if there are descriptions involving "first", "second", etc. in the embodiments of the present application, the descriptions of "first", "second", etc. are only used for descriptive purposes and cannot be understood as indicating or suggesting their relative importance or implicitly indicating the number of technical features indicated. Therefore, the features defined as "first" and "second" may explicitly or implicitly comprise at least one of the features. In addition, if the meaning of "and/or" in the full text is to comprise three parallel schemes, taking "A and/or B" as an example, it comprises scheme A, or scheme B, or a scheme that satisfies both A and B. In addition, the technical solutions between the various embodiments can be combined with each other, but they must be based on the fact that they can be implemented by those skilled in the art. When the combination of technical solutions is contradictory or cannot be implemented, it should be deemed that such combination of technical solutions does not exist and is not within the scope of the present application.

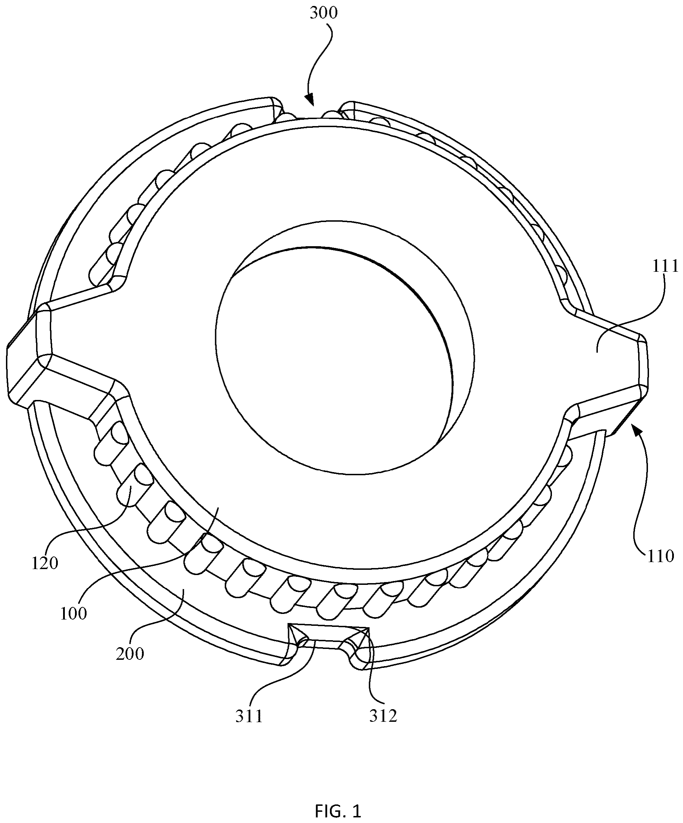

Referring to FIG. 1, the present application proposes an anti-vibration ring that can ensure the accuracy of the installation position of the anti-vibration ring, thereby ensuring the service life of the anti-vibration ring. The anti-vibration ring can be made of rubber, silicone, or other composite materials that can achieve an anti-vibration effect. The manufacturing cost of rubber and silicone is relatively low, and they have a relatively stable energy absorption effect, thereby ensuring that the anti-vibration ring can absorb energy through its own deformation and reduce shock while reducing the cost of using the anti-vibration ring.

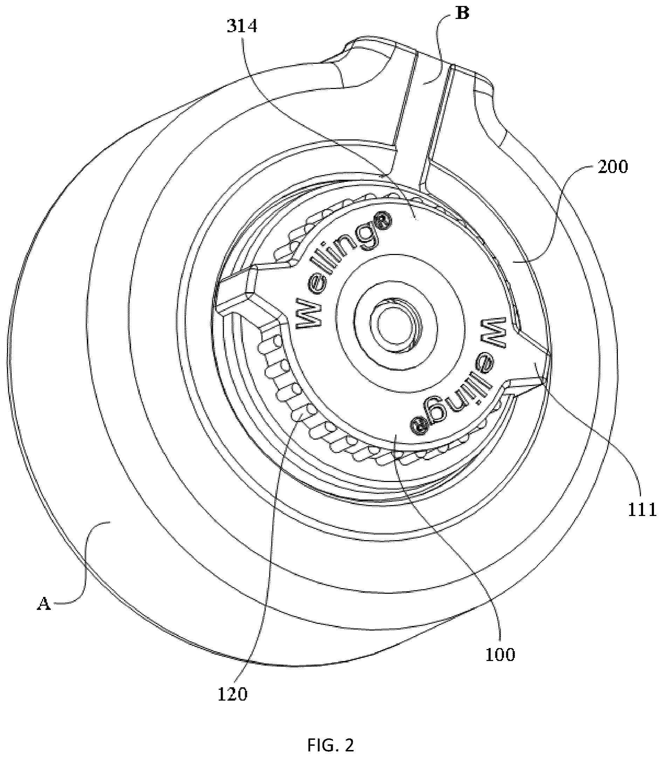

Referring to FIG. 2, generally speaking, a household appliance, such as an air conditioner, comprises a housing and a motor installed in the housing; a positioning part for placing wires is provided at the motor, and a limit matching part is provided at the housing. The present application is implemented as follows.

Referring to FIG. 1 and FIG. 2, in the present application, the anti-vibration ring comprises an anti-vibration body 100, the anti-vibration body is in a ring shape, an installation ring 200 is concentrically provided at one ring surface of the anti-vibration body 100, and the anti-vibration body 100 and the installation ring 200 are provided at one end of the motor. The outer circumferential side walls of the anti-vibration body 100 are respectively provided with anti-rotation limit parts 110 and a plurality of anti-slip ribs 120, and the anti-vibration body 100 or the installation ring 200 is provided with an identification structure 300 for pointing to the positioning part. The identification structure 300 points to the positioning part so that the anti-vibration ring will use the positioning part as a reference during installation, thereby making the position of the anti-vibration ring unique during installation, ensuring the accuracy of the installation position of the anti-vibration ring, and reducing the possibility of the anti-vibration ring being installed in the wrong position during installation. The provision of the anti-rotation limit part 110 and the plurality of the anti-slip ribs 120 further restrict the installation position of the anti-vibration ring, thereby further ensuring the accuracy of the installation position of the anti-vibration ring. It should also be noted that after the anti-vibration ring is installed, the motor will be restricted by the housing, so that the motor is not easy to deviate in the housing, reducing the possibility of motor failure. In addition, the anti-vibration ring uses its own material properties and its own deformation to absorb the vibration generated when the motor rotates, thereby reducing the generation of noise.

In different embodiments of the present application, the identification structure 300 can be respectively configured as an identification notch 311 and/or an identification protrusion, an identification ring 313 and an identification character 314. The above three different settings all play an identification role, thereby helping the installer to determine the installation position of the anti-vibration ring. Accordingly, one of the above three settings, or any combination of the above three settings, can be selected according to actual production needs or design requirements. The three different settings will be described in detail below.

Referring to FIG. 1, in an embodiment of the present application, when the identification structure 300 is provided at the installation ring 200, the identification structure is configured as an identification notch 311 or an identification protrusion. It should be noted that the identification notch 311 and the identification protrusion can also be used in combination. In this embodiment, taking the identification notch 311 as an example, the identification notch 311 points to the positioning part, thereby determining the installation position of the anti-vibration ring. Accordingly, in this embodiment, the identification notch 311 is provided at the outer edge of the installation ring 200, so that the identification notch 311 is easier to correspond to the positioning part. In addition, the identification notch 311 is open, to increase the contrast between the identification notch 311 and the anti-vibration body 100, making its directivity more obvious, and improving the overall directivity function of the identification structure 300.

It should be noted that, in this embodiment, two identification notches 311 are provided, and the two identification notches 311 are opposite to each other at the outer edge of the installation ring 200. The two identification notches 311 are located on the same diameter of the installation ring 200. The anti-vibration body 100 and the installation ring 200 are both ring bodies, and the symmetrical arrangement of the two identification notches 311 allows the anti-vibration ring to have two definite installation positions, thereby ensuring accurate installation while increasing the possible installation positions of the anti-vibration ring, making it easier for installers to install it and improving installation efficiency.

Referring to FIG. 1, in this embodiment, indication openings 312 are further provided at both ends of the identification notch 311. The provision of the indication openings 312 will further improve the contrast between the identification notch 311 and the installation ring 200 or the anti-vibration body 100, thereby further improving the directivity of the identification notch 311. Accordingly, a chamfer is provided between the indication opening 312 and the identification notch 311. The provision of the chamfer makes it easier for the installer to distinguish the position of the identification notch 311 when observing the anti-vibration ring, thereby further improving the easy identification of the identification notch 311 and facilitating the installer to install the anti-vibration ring.

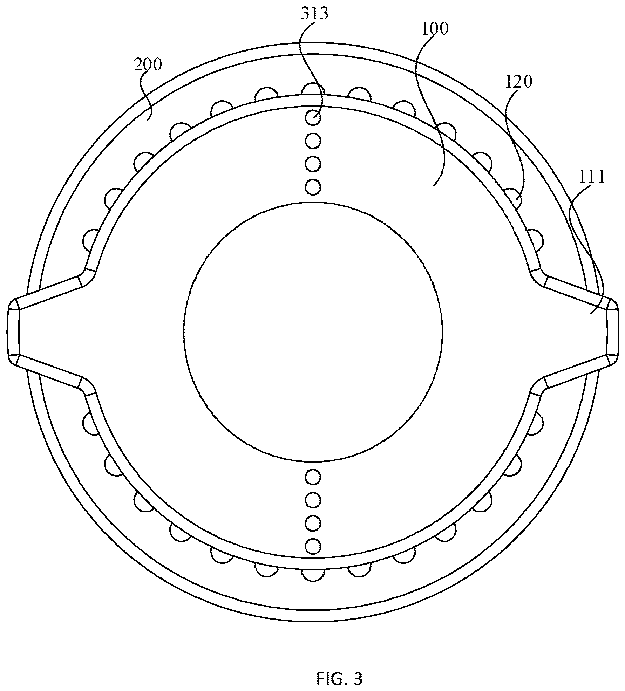

Referring to FIG. 3, in an embodiment of the present application, the identification structure 300 is configured as at least one identification ring 313, and the identification ring 313 is provided at the side of the anti-vibration body 100 away from the installation ring 200. The identification ring 313 also points to the positioning part, thereby determining the only two installation positions of the anti-vibration ring. It should be particularly noted that the identification ring 313 can be any one or a combination of three settings of a ring-shaped coating mark, a ring-shaped protrusion or a ring-shaped groove, to increase the contrast with the anti-vibration body 100, thereby facilitating the installer to determine the installation position of the anti-vibration ring. In this embodiment, the identification ring 313 is circular, and the specific shape of the identification ring 313 can be changed according to actual needs, such as a polygon such as a rectangle or an irregular shape, as long as it can serve as an identification.

Referring to FIG. 3, it should be noted that, in this embodiment, the identification structure 300 is configured as a plurality of identification rings 313 arranged along the radial direction of the anti-vibration body 100. The plurality of identification rings 313 may be of different shapes, and the plurality of identification rings 313 may also be coating marks, protrusions or grooves, respectively. In this embodiment, four circular protrusion identification rings 313 are taken as an example. The four circular protrusion identification rings 313 are arranged along the radial direction of the anti-vibration body 100. The provision of the four circular protrusion identification rings 313 will further improve the contrast with the anti-vibration body 100, making it more eye-catching relative to the anti-vibration body 100, and then the installer can more easily align the positioning part, which facilitates the installation process.

It should also be noted that, referring to FIG. 3, the identification ring 313 in this embodiment is similar to the identification notch 311 in the previous embodiment. A total of eight identification rings 313 are provided, and each group of four identification rings 313 is provided at the surface of the anti-vibration body 100, that is, two groups of identification rings 313 are provided at the surface of the anti-vibration body 100. Four identification rings 313 in the same group are evenly spaced along the radial direction of the anti-vibration body, and the two groups of identification rings 313 are located on the same diameter of the anti-vibration body.

Specifically, during the actual installation process, it is difficult for the installer to look at the side of the anti-vibration body 100 away from the installation ring 200. Therefore, when using a single identification ring 313, the installation of the anti-vibration ring is also prone to deviation due to reasons such as the observation angle and light, which can easily cause the anti-vibration ring to deform. Compared with a single identification ring 313, since multiple identification rings 313 form a straight line, it is easier for the installer to align the identification structure 300 with the positioning part during installation, thereby reducing the possibility of deformation of the anti-vibration ring during installation and ensuring the normal installation of the anti-vibration ring.

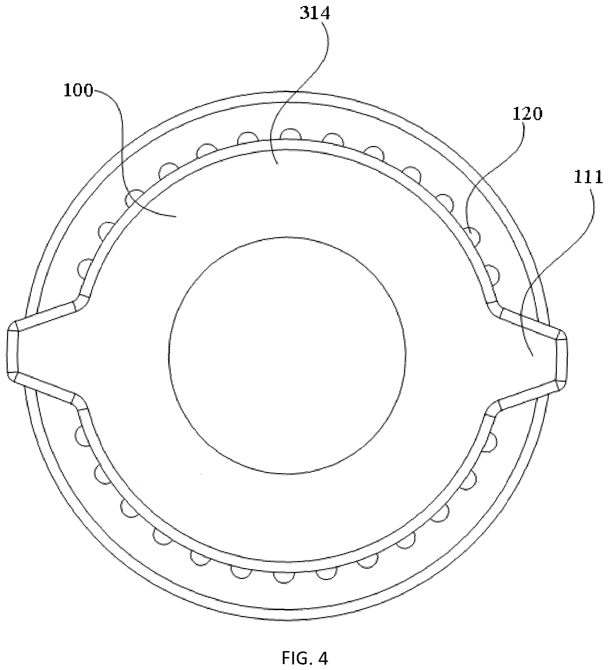

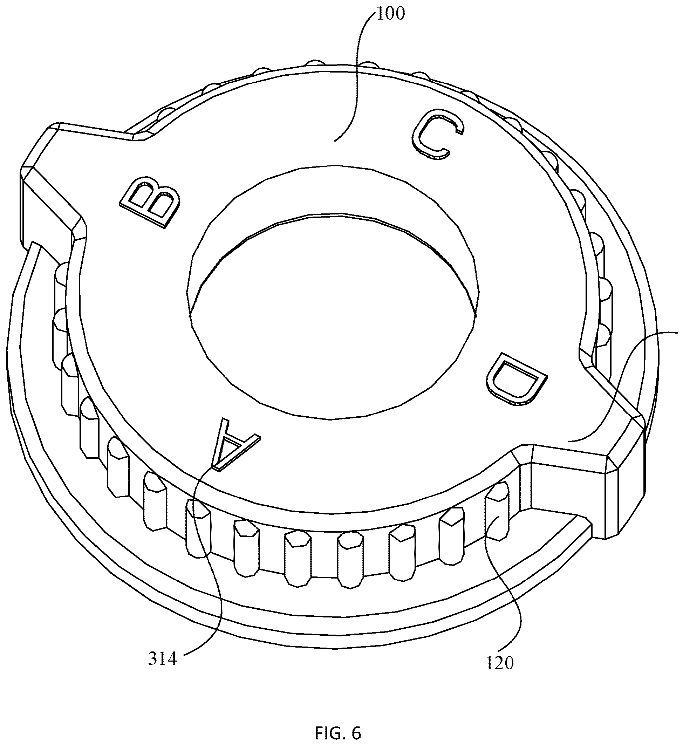

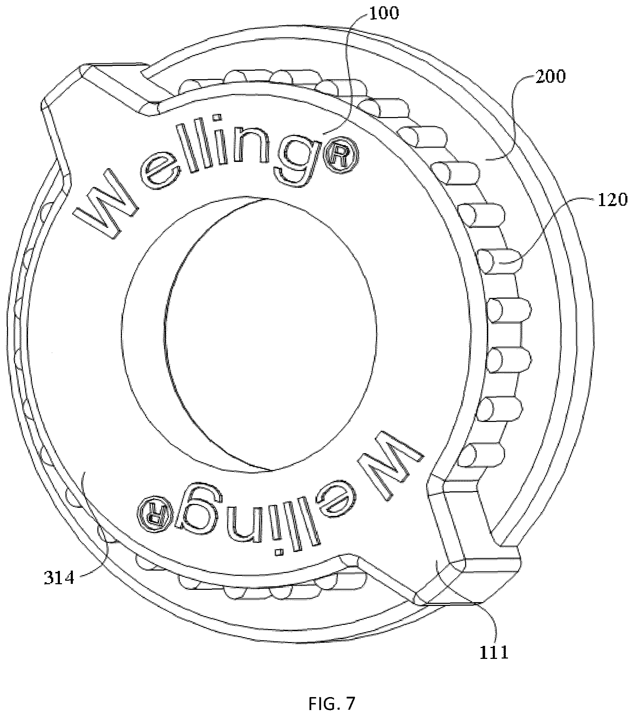

Referring to FIG. 4 to FIG. 7, in an embodiment of the present application, the identification structure 300 is configured as an identification character 314, and the identification character 314 is provided at the side of the anti-vibration body 100 away from the installation ring 200. The characters in the identification character 314 may be one or more, and the identification character 314 may be Chinese, English, numerals, punctuation marks, or any combination of the four. When there are multiple characters, the multiple characters extend circumferentially, and one of the multiple characters can be specified as a character corresponding to the positioning part. Alternatively, when there are multiple characters, the first character in the clockwise or counterclockwise direction is specified to correspond to the positioning part. Alternatively, a gap between two adjacent characters can be specified to correspond to the positioning part. It should also be noted that the identification character 314 can be a coating character, a raised character or a grooved character. When there are multiple characters, the multiple characters can be any one of the coating characters, raised characters or grooved characters, or a mixture of the coating characters, raised characters or grooved characters. The provision of the identification character 314 will increase the contrast between the anti-vibration body 100, so that the installer can more easily align the positioning part, thereby facilitating the installation of the anti-vibration ring.

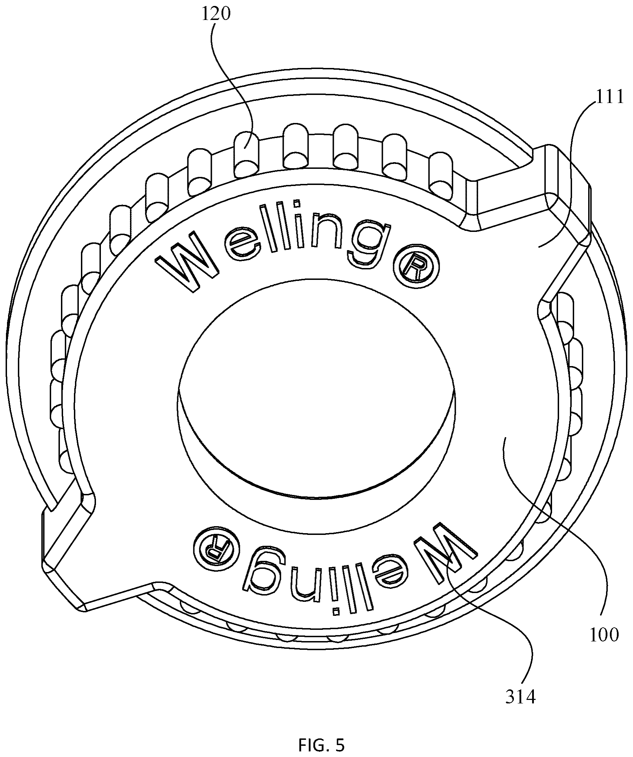

Specifically, in an embodiment of the present application, English raised characters are used. Taking FIG. 5 as an example, the character "W" in the figure is designated as the character corresponding to the positioning part. The central axis of the "W" characters in the two identification characters 314 coincide with each other, and the central axis of the "W" characters coincides with a diameter of the anti-vibration body 100, thereby indicating only two installation positions for the anti-vibration ring. During installation, the central axis of the "W" character is aligned with the positioning part, that is, the identification character 314 corresponds to the positioning part, thereby ensuring the installation position of the anti-vibration ring. Here, it can be pointed out that when the identification character 314 is used as the identification structure 300, a symmetrical character or a character with obvious characteristics can be selected as the identification character 314, such as the "W" mentioned earlier, English characters such as "V", "Y", "O", "T", "W", and "M", the number "1", and the symbol "!", which will not be elaborated here.

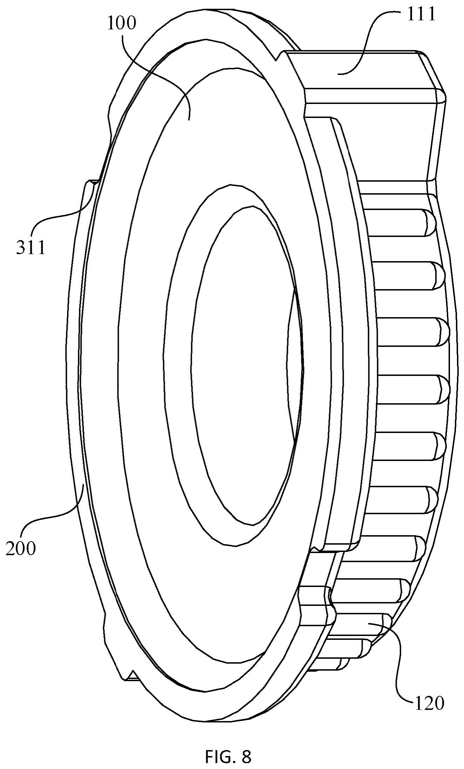

Referring to FIG. 1 and FIG. 8, in an embodiment of the present application, the anti-rotation limit part 110 comprises a plurality of limit protrusions 111, which are provided along the radial direction of the anti-vibration body 100 and protrude from the anti-vibration body 100. In the present embodiment, two limit protrusions 111 are provided, and a distance between the top surfaces of the two limit protrusions 111 is greater than the diameter of the installation ring 200, that is, the two limit protrusions 111 partially protrude from the installation ring 200. A groove for the limit protrusion 111 to be embedded is provided at the limit matching part, so that when the anti-vibration ring is installed, the cooperation between the limit protrusion 111 and the limit matching part will further ensure the installation position of the anti-vibration ring, and the arrangement of the limit protrusion 111 protruding from the anti-vibration body 100 will increase the toughness of the overall structure, thereby strengthening the overall structural strength of the anti-vibration ring.

It should be noted that, in the actual operation of the motor, the limiting protrusion 111 will improve the structural strength of the overall structure of the anti-vibration ring due to its thickness. One limiting protrusion 111 can be provided, but one limiting protrusion 111 will bear all the torque of the motor, which makes the limiting protrusion 111 easy to be damaged, reducing the overall service life of the anti-vibration ring. Therefore, two limiting protrusions 111 are provided in this embodiment, and the two limiting protrusions 111 are connected to the outer peripheral surface of the anti-vibration body and the side of the installation ring close to the anti-vibration body, thereby ensuring the structural strength of the anti-vibration ring. In addition, the limiting protrusion 111 is integrally formed on the anti-vibration ring, which further improves the structural strength of the anti-vibration ring.

Referring to FIG. 1 and FIG. 8, correspondingly, the two limiting protrusions 111 are symmetrically provided, that is, a line connecting the two limiting protrusions 111 coincides with a diameter of the anti-vibration body 100, and the line connecting the two limiting protrusions 111 is perpendicular to the line connecting the two identification notches 311, the two groups of identification rings 313 or the two identification characters 314, which further ensures the position of the anti-vibration ring during installation. The limiting protrusion 111 is a trapezoidal or rectangular shape, and this shape improves the uniqueness of the position of the anti-vibration ring during installation. In this embodiment, the limiting protrusion 111 is a trapezoidal limiting protrusion, that is, the cross-sectional area of the limiting protrusion 111 gradually increases from one end away from the anti-vibration body to the other end, which makes it more convenient for the installer to install the anti-vibration ring. In addition, the maximum thickness of the limiting protrusion 111 in the axial direction of the anti-vibration body is not greater than the sum of the thicknesses of the anti-vibration body and the installation ring, and chamfers are provided all around the limiting protrusion 111, that is, the contact surface between the limiting protrusion 111 and the motor housing. The chamfer arrangement makes it easier for the limiting protrusion 111 to be embedded in the motor housing, thereby reducing the difficulty of installation, and makes it less likely for the limiting protrusion 111 to be deformed during the contact process with the motor housing, further ensuring the structural integrity of the anti-vibration ring.

Referring to FIG. 1 and FIG. 8, it should be noted that, in the present application, the installation ring 200 is integrally formed on one side of the anti-vibration body 100, and the limiting protrusion 111 is integrally formed at the anti-vibration body 100 and connected to the installation ring 200. The integrated arrangement of the three further enhances the structural strength of the anti-vibration ring, and the identification structure can also be integrally formed at the anti-vibration body 100 or the installation ring 200. On the other hand, the symmetrical arrangement of the limiting protrusion 111 enables the anti-vibration ring to have only two installation positions. If the limiting protrusion 111 is a right-angled trapezoidal limiting protrusion 111, the anti-vibration ring has only one installation position. Therefore, the arrangement of the limiting protrusion 111 ensures the uniqueness of the position of the anti-vibration ring during installation, and reduces the possibility of excessive deformation of the anti-vibration ring due to inappropriate installation positions during installation.

Referring to FIG. 8, in the embodiment of the present application, the axial thickness of the installation ring 200 is less than the axial thickness of the anti-vibration body 100, thereby facilitating the installation ring 200 to be mounted on the end of the motor. The ratio of the radial thickness of the installation ring 200 to the anti-vibration body 100 is from 1:2 to 1:6, that is, the radial thickness of the anti-vibration body 100 is greater than that of the installation ring 200, so that the installation ring 200 has a larger deformation amount, further facilitating the installation of the installation ring 200, and facilitating the installation of the anti-vibration ring. In addition, the axial cross-section of the installation ring is rectangular.

Referring to FIG. 1 and FIG. 8, in the embodiment of the present application, a plurality of anti-slip ribs 120 are provided at the outer circumferential side surface of the anti-vibration body 100 and between the two limit protrusions 111, a length direction of the anti-slip ribs 120 is perpendicular to the plane where the installation ring 200 is located, and the anti-slip ribs 120 are provided in an array on the outer circumferential side wall of the anti-vibration body 100. In this embodiment, the anti-slip ribs 120 are also integrally formed at the anti-vibration body 100, and one end of the anti-slip ribs 120 is connected to the installation ring 200. The groove for the anti-slip ribs 120 to be embedded is also provided at the limiting matching part. When installing the anti-vibration ring, the cooperation between the anti-slip ribs 120 and the position-limiting matching part will further ensure the uniqueness of the anti-vibration ring during installation. It should also be noted that the provision of the anti-slip ribs 120 will increase the friction between the anti-vibration ring and the motor housing, so that the anti-vibration ring is not easy to detach from the motor housing. Due to the provision of the anti-slip ribs 120, the anti-vibration ring will be able to withstand greater torque.

The present application also proposes a motor assembly, which comprises a motor and an anti-vibration ring. The specific structure of the anti-vibration ring refers to the above-mentioned embodiment. Since the motor assembly adopts all the technical solutions of the above-mentioned embodiments, it has at least all the beneficial effects brought by the technical solutions of the above-mentioned embodiments, which will not be repeated here.

The present application also proposes an air conditioner, which comprises a motor assembly. The specific structure of the motor assembly refers to the above-mentioned embodiments. Since the air conditioner adopts all the technical solutions of the above-mentioned embodiments, it has at least all the beneficial effects brought by the technical solutions of the above-mentioned embodiments, which will not be repeated here.

The above description are some embodiments of the present application, and do not limit the scope of the present application. All equivalent structural transformations made by using the contents of the specification and drawings of the present application under the inventive concept of the present application, or directly/indirectly applied in other related technical fields, are comprised in the scope of the present application.

## Claims

1. An anti-vibration ring, comprising:
an anti-vibration body;
an installation ring, wherein the anti-vibration body is connected to one of ring surfaces of the installation ring, and an identification structure is provided at the anti-vibration body and/or the installation ring; and
an anti-rotation limit part provided at an edge of the anti-vibration body and/or the installation ring.

2. The anti-vibration ring according to claim 1, wherein the identification structure is configured as at least one identification character.

3. The anti-vibration ring according to claim 1 or 2, wherein the identification structure is configured as at least one identification character provided at a surface of the anti-vibration body away from the installation ring.

4. The anti-vibration ring according to claim 2 or 3, wherein the identification character comprises at least two characters arranged along a circumference direction of the anti-vibration body, and a gap is provided between two adjacent characters.

5. The anti-vibration ring according to claim 4, wherein the at least two characters are configured as one or more of words, letters, symbols or numbers; and/or the at least two characters is one or more of coated characters, raised characters and grooved characters.

6. The anti-vibration ring according to claim 4 or 5, wherein the at least two characters are configured as "O", "T", "W", "M" or "!".

7. The anti-vibration ring according to any one of claims 1 to 6, wherein the identification structure is configured as at least one of an identification notch and/or an identification protrusion provided at an outer edge of the installation ring.

8. The anti-vibration ring according to claim 7, wherein the identification structure is configured as at least one identification ring provided at a surface of the anti-vibration body away from the installation ring.

9. The anti-vibration ring according to claim 8, wherein the identification structure is configured as a plurality of identification rings arranged along a radial direction of the anti-vibration body; and/or
the identification ring is configured as at least one of a ring-shaped coating mark, a ring-shaped protrusion or a ring-shaped groove.

10. The anti-vibration ring according to any one of claims 1 to 9, wherein the anti-vibration body is in a ring shape, and the installation ring is provided coaxially with the anti-vibration body.

11. The anti-vibration ring according to claim 10, wherein an outer diameter of the installation ring is greater than an outer diameter of the anti-vibration body, and an inner diameter of the installation ring is less than or equal to the outer diameter of the anti-vibration body and greater than or equal to an inner diameter of the anti-vibration body.

12. The anti-vibration ring according to any one of claims 1 to 10, wherein the anti-rotation limit part comprises limit protrusions respectively provided at edges of the anti-vibration body and/or the installation ring on opposite sides; the limit protrusions are connected to an outer peripheral surface of the anti-vibration body and a side surface of the installation ring adjacent to the anti-vibration body, and the limit protrusions are at least partially protruded radially from the installation ring.

13. The anti-vibration ring according to claim 12, wherein cross-sectional areas of the limit protrusions gradually increase from an end away from the anti-vibration body to an other end.

14. The anti-vibration ring according to claim 12, wherein a maximum thickness of the limit protrusions in an axial direction of the anti-vibration body is less than or equal to a sum of a thickness of the anti-vibration body and a thickness of the installation ring.

15. The anti-vibration ring according to claim 12, wherein an anti-slip rib is provided between two adjacent limit protrusions.

16. The anti-vibration ring according to claim 15, wherein the anti-slip rib is provided at the outer peripheral surface of the anti-vibration body, and the anti-slip rib extends in an axial direction of the anti-vibration body.

17. The anti-vibration ring according to any one of claims 1 to 16, wherein an axial thickness of the installation ring is less than an axial thickness of the anti-vibration body.

18. The anti-vibration ring according to any one of claims 1 to 17, wherein a ratio of a radial thickness of the installation ring to the anti-vibration body is 1:(2-6).

19. The anti-vibration ring according to any one of claims 1 to 8, wherein the installation ring has a rectangular axial cross section.

20. The anti-vibration ring according to any one of claims 1 to 19, wherein the installation ring and the anti-vibration body are made of rubber or silicone.

21. The anti-vibration ring according to any one of claims 1 to 20, wherein the installation ring, the anti-vibration body and the anti-rotation limit part are integrally formed.

22. A motor assembly, comprising a motor and an anti-vibration ring according to any one of claims 1 to 20, wherein the anti-vibration ring is mounted at an end of the motor.
